(19) Europäisches Patentamt
European Patent Office
Office européen des brevets

(11) **EP 1 801 073 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(51) Int Cl.:
*C01B 33/18* (2006.01)   *C08K 3/36* (2006.01)

(21) Anmeldenummer: **05112533.4**

(22) Anmeldetag: **20.12.2005**

(54) **Pyrogen hergestelltes Siliciumdioxid**

Pyrogenically produced silicon dioxide

Dioxyde de silicium pyrogéniquement préparé

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**27.06.2007 Patentblatt 2007/26**

(73) Patentinhaber: **Evonik Degussa GmbH**
**45128 Essen (DE)**

(72) Erfinder:
• **Meyer, Jürgen, Dr.**
  **63811 Stockstadt/Main (DE)**
• **Rochnia, Matthias, Dr.**
  **63683 Ortenberg (DE)**
• **Scholz, Mario, Dr.**
  **63584 Gründau (DE)**

(56) Entgegenhaltungen:
**US-A1- 2002 168 524     US-A1- 2005 241 531**

**Beschreibung**

Die Erfindung betrifft pyrogen hergestelltes Siliciumdioxid, ein Verfahren zu seiner Herstellung und seiner Verwendung.

Pyrogen hergestelltes Siliciumdioxid (englisch fumed silica) ist bekannt aus Ullmanns Enzyklopädie der technischen Chemie, Band 21, Seite 464 (1982).

Es wird hergestellt, indem man eine verdampfbare Siliciumverbindung, wie zum Beispiel Silicumtetrachlorid, im Gemisch mit Wasserstoff und Sauerstoff verbrennt.

Die Zerkleinerung von Stoffen zu Mehlen (50 - 500 $\mu$m), Pudern (5-50 $\mu$m) und noch. größeren Feinheiten (kleiner 5 $\mu$m) ist in der Praxis allgemein üblich. Es werden für alle Zerkleinerungsaufgaben eine Vielzahl von technischen Einrichtungen angeboten und betrieben, die den Besonderheiten der einzelnen Aufgaben angepaßt sind. Eine gute Übersicht über die Zerkleinerungsprobleme und die diversen Maschinen wird in Ullmann's Enzyklopädie der technischen Chemie, 3. Auflage Band 1, Seite 616 bis Seite 638 gegeben. Bei pyrogen hergestelltem Siliciumdioxid sind die mittleren Primärteilchendurchmesser beachtlich geringer (5-50 nm), als sie durch eine mechanische Zerkleinerung erhalten werden können.

Die Primärteilchen und Aggregate der pyrogenen Kieselsäure mit einer Oberfläche von 200 m2/g können im Elektronenmikroskop sichtbar gemacht werden.

Die Primärteilchen und Aggregate einer pyrogenen Kieselsäure lagern sich zu größeren Verbänden, den Agglomeraten zusammen, die im Regelfall um so größer sind, je geringer die Primärteilchengröße beziehungsweise je größer die spezifische Oberfläche ist. Sowie je stärker das pyrogen hergestellte Siliciumdioxid verdichtet ist.

Die Bindungskräfte, mit denen diese Agglomerate zusammengehalten werden, sind relativ schwach. Dennoch bedarf es bei der Einarbeitung und Auflösung dieser Agglomerate in einem flüssigen System zum Zweck der homogenen Verteilung der Primärteilchen und Aggregate beziehungsweise niedrig agglomerierter Partikel eines gewissen Scheraufwandes. Für die Dispergierung werden je nach Anwendungsgebiet die verschiedensten Mischgeräte eingesetzt, wobei sowohl die Viskosität und Polarität des Systems als auch die Agglomeratfestigkeit und die gewünschte Homogenität für die Auswahl bestimmend sind.

Mit einfachen Rührwerken, zum Beispiel Flügelrührern, ist die direkte Einarbeitung kleiner Mengen Kieselsäuren meist nicht befriedigend durchführbar, besonders dann nicht, wenn es sich um niedrigviskose Systeme handelt. Jedoch sind die Lack- und Farbenhersteller, sowie die Verarbeiter daran interessiert, eine anwendungstechnisch optimale Verteilung der überwiegend als Verdickungs- und Thixotropierungsmittel eingesetzten Kieselsäuren mit einfachsten Geräten und möglichst geringem zeitlichen und energetischen Aufwand zu erzielen.

Im Falle der Flügelrührer-Dispergierung werden die groben Kieselsäureagglomerate nicht genügend zerkleinert und können so nur einen kleinen Beitrag zu Anhebung von Viskositäten und Thixotropie leisten. Die Angaben beziehen sich auf ein UP-Harz (ungesättigtes Polyester-Harz) als Dispersionsmittel.

Eine Verminderung der Agglomeratgröße durch Dispergierung außerhalb eines flüssigen Systems, also praktisch an der Luft oder durch Mahlung im herkömmlichen Sinne ist nur im begrenzten Umfang möglich, denn bei gegebener Agglomerationsneigung des Materials stellt sich im Anschluß an die Zerkleinerung alsbald der alte Agglomerationszustand wieder ein. Dieser Effekt tritt spätestens nach erneuter Verdichtung des durch den mechanischen Eingriff stark aufgelockerten und in dieser Form nicht versand- und lagerfähigen Materials ein. Auch die Lagerzeit würde sich im Sinne erneuten Agglomeratvergrößerung auswirken.

Als Massezahl und Bewertungsgröße für den Verteilungszustand einer dispergierbaren Kieselsäure und maximale Agglomeratgröße der Dispersion (Körnigkeit) gilt der sogenannte Grindometerwert nach DIN 53203.

Es ist bekannt, pyrogen hergestelltes Siliciumdioxid zu hydrophobieren, in einer Stiftmühle zu vermahlen und anschließend zu klassieren (US 2004/110077 A1). Dieses bekannte Siliciumdioxid wird als externes Additiv in Tonermischungen eingesetzt.

Hydrophiles, pyrogen hergestelltes Siliciumdioxid mit einer BET-Oberfläche besitzt einen in UP-Harz (ungesättigtes Polyesterharz Ludepal P6 der BASF, 2 %ige Dispergierung) nach der DIN-Vorschrift bestimmten Grindometerwert von 50 bis 60.

Ist diese pyrogen hergestellte Kieselsäure zusätzlich höher verdichtet (100 bis 120 g/l), liegt auch der Grindometerwert deutlich höher, nämlich bei über 100, wodurch ein zusätzlicher nicht unerheblicher Aufwand als Verdickungs- und Thixotropierungsmittel erforderlich ist.

Es ist bekannt, eine hochdispergierte Kieselsäure mit einer Oberfläche von ca. 300 m$^2$/g in einer Stiftmühle zu vermahlen.

Der erreichte Grindometerwert beträgt anfangs bei der unverdichteten Kieselsäure 25.

Verdichtet man diese Kieselsäure auf 50 g/l, steigt der Grindometerwert auf 30 und bei einer weiteren Verdichtung auf 75 g/l sogar auf etwa 40 an.

Bei einer Lagerung über einen Zeitraum von drei Monaten weist die vermahlene, nicht modifizierte und auf 50 g/l verdichtete Kieselsäure einen Grindometerwert von 50 bis 60 auf.

Die Reagglomeration kann gemäß dem Stand der Technik nur verhindert werden, wenn man die hydrophile Kieselsäure mit 3 Gew.-% einer hydrophoben Kieselsäure vermischt und dieses Gemisch mittels einer Luftstrahlmühle oder einer Stiftmühle vermahlt (EP 0 076 377 B1).

Dabei wird bei einem pyrogen hergestellten Siliciumdioxid mit einer BET-Oberfläche von 200 $m^2$/g selbst nach einer Verdichtung auf 73 beziehungsweise 107 g/l ein Grindometerwert von 35 erreicht.

Bei einer pyrogen hergestellte Kieselsäure mit einer BET-Oberfläche von 300 $m^2$/g wird durch den Zusatz von hydrophober Kieselsäure vor dem Vermahlen der Grindometerwert auf 10 bei einem Stampfgewicht von 28,1 g/l und von 15 bis 20 bei einem Stampfgewicht von 50 g/l erreicht.

Die bekannten pyrogen hergestellten Kieselsäuren weisen den Nachteil auf, daß sie einen unerwünschten Anteil an hydrophober Kieselsäure enthalten.

Gegenstand der Erfindung ist eine pyrogen hergestelltes Siliciumdioxid, welches dadurch gekennzeichnet ist, daß es die folgenden physikalisch-chemischen Kenndaten aufweist:

| BET-Oberfläche | 200 $\pm$ 15 $m^2$/g |
| Grindometerwert | gleich/kleiner 30 $\mu$m |
| Medianwert | PCS 65 bis 85 nm |

Ein weiterer Gegenstand der Erfindung ist ein Verfahren zur Herstellung des erfindungsgemäßen Siliciumdioxids, welches dadurch gekennzeichnet ist, daß man ein pyrogen hergestelltes Siliciumdioxid mit einer BET-Oberfläche von 200 $\pm$ 25 $m^2$/g vermahlt.

In einer bevorzugten Ausführungsform der Erfindung kann die Vermahlung mittels einer Stiftmühle oder einer Luftstrahlmühle erfolgen.

Das pyrogen hergestellte Siliciumdioxid kann eine mittlere Primärteilchengröße von 12 nm $\pm$ 5 nm, vorzugsweise 12 nm, aufweisen.

In einer weiteren Ausführungsform der Erfindung kann man ein pyrogen hergestelltes Siliciumdioxid mit einer Stampfdichte von ca. 50 $\pm$ 10 g/l, vorzugsweise 50 $m^2$/g, einsetzen.

In einer besonderen Ausführungsform der Erfindung kann man ein pyrogen hergestelltes Siliciumdioxid einsetzen, welches die folgenden physikalisch-chemischen Kenndaten aufweist:

| | AEROSIL® 200 |
|---|---|
| Verhalten gegenüber Wasser | hydrophil |
| Aussehen | weißes Pulver |
| Oberfläche nach BET[1]        $m^2$/g | 200 $\pm$ 25 |
| Mittlere Größe der Primärteilchen        mm | 12 |
| Stampfdichte [2]        g/l | ca. 50 |
| Trocknungsverlust [3] (2 h bei 105 °C)        % bei Verlassen des Lieferwerkes | <= 1,5 |
| Glühverlust [4][5] (2 h bei 1.000 °C)        % | <= 1 |
| pH-Wert [6] (in 4%iger wäßriger Disperson) | 3,7 - 4,7 |
| $SiO_2$ [7]        % | >= 99,8 |
| $Al_2O_3$ [7]        % | <= 0,05 |
| $Fe_2O_3$ [7]        % | <= 0,003 |
| $TiO_2$ [7]        % | <= 0,03 |

(fortgesetzt)

|  | AEROSIL® 200 |
|---|---|
| HCl [7)8)]          % | <= 0,025 |

| 1) Nach DIN ISO 9277 |
| 2) Nach DIN EN ISO 787-11, JIS K 5101/20 (ungesiebt) |
| 3) Nach DIN EN ISO 787-2, ASTM D 280, JIS K 5101/23 |
| 4) Nach DIN EN 3262-20, ASTM D 1208, JIS K 5101/24 |
| 5) bezogen auf die 2 Stunden bei 105 °C getrocknete Substanz |
| 6) Nach DIN EN ISO 787-9, ASTM D 1208, JIS K 5101/26 |
| 7) bezogen auf die 2 Stunden bei 1.000 °C geglühte Substanz |
| 8) HCl-Gehalt in Bestandteil des Glühverlustes |

Das gemäß Erfindung eingesetzte Siliciumdioxid Aerosil® 200 mit einer BET-Oberfläche unterscheidet sich von dem bekannten Aerosil® 300, welches eine Oberfläche von 300 $m^2/g$ aufweist, nicht nur durch die Oberflächengröße, sondern auch durch die mittlere Größe der Primärteilchen. Das Aerosil® 300 weist eine mittlere Primärteilchengröße von 7 nm auf. Auf Grund dieser Unterschiede weisen diese Siliciumdioxide unterschiedliche anwendungstechnische Eigenschaften auf.

Das erfindungsgemäße pyrogen hergestellte Siliciumdioxid enthält keine hydrophoben Anteile. Trotzdem neigt das erfindungsgemäße Siliciumdioxid nicht zu Reagglomeration. Der Grindometerwert liegt bei oder unter 30 $\mu$m.

Das erfindungsgemäße pyrogen hergestellte Siliciumdioxid kann als Füllstoff in Siliconkautschukmassen verwendet werden.

Siliconkautschukmassen sowie die Verwendung von pyrogen hergestelltem Siliciumdioxid (AEROSIL®) in Siliconkautschukmassen sind bekannt (Ullmann's Encyclopedia of Industrial Chemistry, Volume A 23, Rubber, 1, 221 ff.; Rubber 3, 3,6 ff.; Volume A 24, Silicones, 57 ff. 1993).

Pyrogen hergestelltes Siliciumdioxid wird aufgrund seiner ausgezeichneten Verdickungswirkung (Thixotropierung) in Silicondichtungsmassen eingesetzt, wobei diese Verdickungswirkung bei der Anwendung als Fugenmasse erwünscht ist.

Sollen jedoch die Siliconkautschukmassen als Beschichtungsmassen eingesetzt werden, ist eine niedrige Verdickung erwünscht (US 6.268.300).

Von entscheidender Bedeutung ist in beiden Fällen die optische Qualität der Oberfläche der Siliconvulkanisate.

Aufgabe der vorliegenden Erfindung ist es daher, Siliconkautschukmassen bereitzustellen, die durch den Einsatz von pyrogen hergestelltem Siliciumdioxid als Füllstoff nach der Vulkanisation eine optisch hochwertige Oberfläche zeigen.

Gegenstand der Erfindung sind Siliconkautschukmassen, enthaltend 0,5 bis 60 Gew.-%, bezogen auf die Gesamtmasse des erfindungsgemäßen pyrogen hergestelltem Siliciumdioxid mit den folgenden physikalisch-chemischen Kenndaten:

| BET-Oberfläche | 200 $\pm$ 15 $m^2/g$ |
| Grindometerwert | gleich/kleiner 30 |
| Medianwert nach PCS | 65 bis 85 nm |

und

40 - 99,5 Gew.-%, bezogen auf die Gesamtmasse eines Organopolysiloxans der Formel

$$Z_n Si R_{3-n} -O-[Si R_2 O]_x -Si R_{3-n} -Z'_n$$

mit R = Alkyl, Alkoxy-, Aryl-, Oxim-, Acetoxy-,. Alkylreste, mit 1 bis 50 Kohlenstoffatomen,

unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 40 - 10.000 Repetiereinheiten.

Z = OH, Cl, Br, Acetoxy-, Amino-, Aminoxy-, Oxim-, Alkoxy-Amido-, Alkenyloxy-, Acryloxy-, oder Phosphatresten, wobei die organischen Reste bis zu 20 Kohlenstoffatome tragen können, jeweils gleich oder verschieden.
Z'= Oxim-, Alcoxy-, Acetoxy-, Amino-, Amido-,
n = 1 - 3

X = 100 - 15.000

Als Organopolysiloxane können alle Polysiloxane verwendet werden, die bisher als Grundlage für bei Raumtemperatur vernetzenden (RTV) Massen verwendet wurden beziehungsweise verwendet werden konnten. Sie können zum Beispiel durch die allgemeine Formel

$$Z_n \, Si \, R_{3-n}\text{-O-}[Si \, R_2 \, O]_x \text{-Si} \, R_{3-n} \text{-Z'}_n$$

beschrieben werden, wobei X,R,Z' und Z folgenden Bedeutungen haben:

mit R =Alkyl, Alkoxy-, Aryl-, Oxim-, Acetoxy-,. Alkylreste, mit 1 bis 50 Kohlenstoffatomen, unsubstituiert oder mit O, S, F, Cl, Br, I substituiert, jeweils gleich oder verschieden und/oder Polystyrol-, Polyvinylacetat-, Polyacrylat-, Polymethacrylat- und Polyacrylnitrilreste mit 40 - 10.000 Repetiereinheiten.
Z = OH, Cl, Br, Acetoxy-, Amino-, Aminoxy-, Oxim-, Alkoxy-Amido-, Alkenyloxy, Acryloxy-, oder Phosphatresten, wobei die organischen Reste bis zu 20 Kohlenstoffatome tragen können, jeweils gleich oder verschieden.
Z'= Oxim-, Alcoxy-, Acetoxy-, Amino-, Amido-,
n = 1 - 3
X = 100 - 15.000

Innerhalb beziehungsweise entlang der Siloxankette in der oben angegebenen Formel können auch andere meist nur als Verunreinigungen vorliegende Siloxaneinheiten als Diorganosiloxaneinheiten, zum Beispiel solche der Formel $RSiO_{3/2}$ $R3O_{1/2}$ und $SiO_{4/2}$, wobei R jeweils die oben dafür angegebene Bedeutung hat, vorhanden sein. Die Menge dieser anderen Siloxaneinheiten sollte 10 Molprozent nicht übersteigen.
Beispiele für R mit der Bedeutung Alkylrest sind zum Beispiel Methyl-, Ethyl-, Propyl-, Hexyl-, und Octylreste; als Alkenylreste können Vinyl-, Allyl-, Ethylallyl- und Butadienylreste; und als Arylreste sind Phenyl- und Tolyrest einsetzbar.
Beispiele für substituierte Kohlenwasserstoffreste R sind insbesondere halogenierte Kohlenwasserstoffreste wie der 3,3,3-Trifluorpropylrest, Chlorphenyl- und Bromotolylrest; und Cyanalkylreste, wie der β-Cyanethylrest.
Beispiele für Polymere als Rest R sind über Kohlenstoff an Silicium gebundene Polystyrol-, Polyvinylacetat-, Polyacrylat-, Polymetacrylat- und Polyacrylnitrilreste.
Vorzugsweise besteht der überwiegende Teil der Reste R wegen der leichteren Zugänglichkeit aus Methylgruppen. Die übrigen Reste R sind insbesondere Vinyl- und/oder Phenylgruppen.
Insbesondere im Falle des Vorliegens von unter Ausschluß von Wasser lagerfähigen, bei Zutritt von Wasser bei Raumtemperatur zu Elastomeren härtenden Formulierungen handelt es sich bei Z und Z' um hydrolysierbare Gruppen. Beispiele für solche Gruppen sind Acetoxy-, Amino-, Aminoxy-, Alkenyloxy- (zum Beispiel $H_2C = (CH_3CO\text{-})$), Acyloxy- und Phosphatgruppen. Vor allem wegen der leichteren Zugänglichkeit sind als Z Acyloxygruppen, insbesondere Acetoxygruppen, bevorzugt. Es werden jedoch auch zum Beispiel mit Oximgruppen, wie solchen der Formel -ON=C $(CH_3)$ $(C_2H_5)$, als Z ausgezeichnete Ergebnisse erzielt. Beispiele für hydrolysierbare Atome Z sind Halogen- und Wasserstoffatome, Beispiele für Alkenylgruppen Z sind insbesondere Vinylgruppen.
Die Viskosität der im Rahmen der Erfindung verwendeten Organopolysiloxane sollte 500000 cP bei 25 °C, vorzugsweise 150000 cP bei 25 °C nicht übersteigen. Dementsprechend sollte der Wert x vorzugsweise 40000 nicht übersteigen.
Beispiele für verwendbare Organopolysiloxane sind zum Beispiel die Silikonpolymere E50 (α, ω-Hydroxydimethylsiloxypolydimethylsiloxan) oder M50 (α, ω-Hydroxydimethylsiloxypolydimethylsiloxan) der Fa. GE Bayer Silicones.
Es können auch Gemische aus verschiedenen Organopolysiloxanen verwendet werden.
Das Vermischen dieser Organopolysiloxane mit dem pyrogen hergestelltem Siliciumdioxid und gegebenenfalls den weiteren Bestandteilen der erfindungsgemäßen Formulierung kann in beliebig bekannter Weise, zum Beispiel in mechanischen Mischgeräten, erfolgen. Es vollzieht sich sehr rasch und leicht, gleichgültig in welcher Reihenfolge die Zugabe der Mischungsbestandteile durchgeführt wird.
Vorzugsweise werden die erfindungsgemäßen pyrogen hergestelltem Siliciumdioxid in Mengen von 0,5 bis 60 Gew.-%, vorzugsweise 3 % bis 30 Gew.-%, bezogen auf das Gesamtgewicht der zu Elastomeren härtbaren Massen, eingesetzt.
Liegen in den reaktionsfähigen endständigen Einheiten enthaltenden Diorganopolyxsiloxanen als einzige reaktionsfähige endständige Einheiten solche mit Sigebundenen Hydroxylgruppen vor, so müssen diese Diorganopolysiloxane vernetzt werden. Dies kann in an sich bekannter Weise durch das in der Luft enthaltene Wasser, gegebenenfalls unter Zugabe von weiterem Wasser mit einem Vernetzungsmittel erfolgen. Hier kann zum Beispiel der Silopren-Vernetzer 3034 von GE Bayer Silicones, der Ethyltriacetoxysilan optional in Gegenwart eines Kondensationskatalysators in bekannter Weise eingesetzt werden. Geeignete Katalysatoren für alle erfindungsgemäßen Formulierungen sind zum Beispiel die Silopren-Katalysatoren DBTA oder Typ 162 dibutylzinndiacetat oder -dilaurat des gleichen Herstellers.

In einer besonderen Variante der erfindungsgemäßen Siliconkautschukmassen können zusätzlich 0,5 - 20, bevorzugt 2 - 10 Gew.-%, bezogen auf das Gesamtgewicht der Masse, eines Vernetzers mit der Formel

$$R'_{4-t}Si\,Z'_4$$

Mit R' = Alkyl-, Alkoxy-, Acetoxy-, Oxim-, Aryl-, Alkenreste, mit 1 bis 50 Kohlenstoffatomen, unsubstituiert oder mit 0,S,F,Cl,Br,I substituiert, jeweils gleich oder verschieden und/oder Polystyrol-, Polyvinylacetat-, Polyacrylat-, Polymethacrylat- und Polyacrylnitrilreste mit 5 - 5.000 Repetiereinheiten.

Z' = OH,Cl,Br,Acetoxy-, Oxim-, Amino-, Aminoxy-, Alkenyloxy- oder Phosphatresten, wobei die organischen Reste bis zu 20 Kohlenstoffatome tragen können, jeweils gleich oder verschieden.

t = 3 oder 4 enthalten sein.

Alle Gewichtsangaben beziehen sich auf die Gesamtmenge an Siliconkautschukmassen.

Beispiele für Silane der oben angegebenen Formel sind Ethyltriacetoxysilan, Methyltriacetoxysilan, Isopropyltriacetoxysilan, Isopropoxytriacetoxysilan, Vinyltriacetoxysilan, Methyltrisdiethylaminooxysilan, Methyltris (-cyclohexylamino) -silan, Methyltris (-diethylphosphato) -silan und Methyltris (-methylethylketoximo) -silan

Selbstverständlich können erfindungsgemäße Formulierungen außer Organopolysiloxanen, hydrophobierte Kieselsäure, Vernetzungsmittel und Vernetzungskatalysatoren, gegebenenfalls herkömmlicherweise meist oder häufig in zu Elastomeren härtbaren Massen verwendete Füllstoffe, enthalten. Beispiele für solche Stoffe sind Füllstoffe mit einer Oberfläche unterhalb 50 m$^2$/g, wie Quarzmehl, Kaolin, Schichtsilikate, Tonmineralien, Diatomeenerde, ferner Zikoniumsilikat und Calciumcarbonat, ferner unbehandeltes pyrogen erzeugtes Siliciumdioxid, organische Harze, wie Polyvinylchloridpulver, Organopolysiloxanharze, faserige Füllstoffe, wie Asbest, Glasfasern und organische Pigmente, lösliche Farbstoffe, Duftstoffe, Korrosionsinhibitoren, die Härtung verzögernde Mittel, wie Benzotriazol und Weichmacher, wie durch Trimethylsiloxygruppen endgeblockte Dimethylpolysiloxane.

Optional können die erfindungsgemäßen RTV-1K-Siliconkautschukmassen 0,1 - 20, bevorzugt 0,1 - 15, besonders bevorzugt 0,1 - 10 Gew.-% (bezogen auf die Gedamtmenge der Formulierung) wasserbindende Stoffe enthalten. Geeignete Stoffe hierfür sind zum Beispiel Carbonsäureanhydride, zum Beispiel Essigsäureanhydrid oder Maleinsäureanhydrid, und/oder Kohlensäureester, wie zum Beispiel Diethylcarbonat, Ethylcarbonat und/oder Alkenyloxyverbindungen und/oder Ketale, wie zum Beispiel Dimethyldioxolan. Es ist möglich, ein oder mehrere dieser Stoffe einzusetzen.

Weiterhin können die Siliconkautschukmassen 0,01 bis 99,5 Gew.-% eines unfunktionalisierten Polysiloxans enthalten. Hier können die bereits genannten Polysiloxane eingesetzt werden, sofern sie nicht funktionalisiert sind. Ein geeignetes, unfunktionales Polysiloxan ist beispielsweise Baysilone-Öl M1000 (Polydiomethylsiloxan) der Fa. Ge Bayer Silicones.

Zusätzlich können die Siliconkautschukmassen 0,01 bis 6 Gew.-% organische oder anorganische Verbindungen der Metalle Pt,Sn,Ti und/oder Zn als Katalysator und/oder 0,01 bis 6 Gew.-% Inhibitoren und/oder 0,01 - 6 Gew.-% Funigizide und/oder Bakterizide und/oder 0,01 bis 6 Gew.-% Haftvermittler enthalten (wie zum Beispiel Silopren-Haftvermittler 3001 von GE Bayer Silicones, mit der Zusammensetzung: Ditert-butoxy-diacetoxy-Silan). Als Funigizide / Bakterizide können zum Beispiel Isothiazolinon, Vinycin oder Benzisothiazolinon eingesetzt werden.

Die erfindungsgemäßen Silikonkautschukmassen können als Silikonkautschuk-Systemen der Gruppe der raumtemperaturvernetzenden Einkomponenten-Silikonkautschukdichtungsmassen (1K-RTV) sowie selbstnivellierende raumtemperaturvernetzende Silikonkautschukmassen (1K-RTV) eingesetzt werden.

Die Silikonkautschukmassen können als Fugenmassen, Fensterdichtmassen, Dichtungen in Kraftfahrzeugen und Sport- und Haushaltsgeräten, hitzebeständigen Dichtungen, ölausschwitzenden und chemikalienbeständigen Dichtungen, sowie wasserdampfbeständigen Dichtungen, und Dichtungen in elektrischen und elektronischen Geräten eingesetzt werden.

Die Silikonkautschukmassen können als Beschichtungsmassen für Textilien, z. B. Spitzenbänder (Antislip), und textile Werkstoffe, z.B. Glasgewebe oder Nylongewebe, eingesetzt werden.

Die Vulkanisate der erfindungsgemäßen Silikonkautschukmassen weisen vorteilhafterweise eine hochwertige Oberfläche auf.

*Beispiele:*

*I. Herstellung des erfindungsgemäßen pyrogen hergestellten Siliciumdioxids*

Zur Herstellung der erfindungsgemäßen Beispiele wurde handelsübliches AEROSIL® 200 (Sackware) mit einer Dosierwaage in die eingesetzte Mühle dosiert und vermahlen. Das Aerosil® 200 weist die in der Tabelle 1 aufgeführten physikalisch-chemischen Eigenschaften auf.

*Tabelle 1*

| Eingesetztes pyrogen hergestelltes Siliciumdioxid | |
|---|---|
| | AEROSIL® 200 |
| Verhalten gegenüber Wasser | hydrophil |
| Aussehen | weißes Pulver |
| Oberfläche nach BET[1)] m$^2$/g | 200 ± 25 |
| Mittlere Größe der Primärteilchen nm | 12 |
| Stampfdichte [2)] g/l | ca. 50 |
| Trocknungsverlust [3)] (2 h bei 105 °C) % bei Verlassen des Lieferwerkes | <= 1,5 |
| Glühverlust [4)5)] (2 h bei 1.000 °C) % | <= 1 |
| pH-Wert [6)] (in 4%iger wäßriger Disperson) | 3,7 - 4,7 |
| SiO$_2$ [7)] % | >= 99,8 |
| Al$_2$O$_3$ [7)] % | <= 0,05 |
| Fe$_2$O$_3$ [7)] % | <= 0,003 |
| TiO$_2$[7)] % | <= 0,03 |
| HCl [7)8)] % | <= 0,025 |
| 1) Nach DIN ISO 9277<br>2) Nach DIN EN ISO 787-11, JIS K 5101/20 (ungesiebt)<br>3) Nach DIN EN ISO 787-2, ASTM D 280, JIS K 5101/23<br>4) Nach DIN EN 3262-20, ASTM D 1208, JIS K 5101/24<br>5) bezogen auf die 2 Stunden bei 105 °C getrocknete Substanz<br>6) Nach DIN EN ISO 787-9, ASTM D 1208, JIS K 5101/26<br>7) bezogen auf die 2 Stunden bei 1.000 °C geglühte Substanz<br>8) HCl-Gehalt in Bestandteil des Glühverlustes | |

Für die Versuche wurde eine Stiftmühle (Alpine 160Z, Rotordurchmesser 160mm) oder eine Luftstrahlmühle (Mahlraumdurchmesser: 240 mm, Mahlraumhöhe: 35 mm) eingesetzt. Die einzelnen Parameter der Herstellung sind in der Tabelle 2 aufgeführt.

Das vermahlene Produkt wurde mit einem Schlauchfilter (Filterfläche: 3,6 m$^2$, Filtermaterial: Nylongewebe) isoliert. In weiteren Versuchen wurde das erhaltene vermahlene Produkt mit einer handelsübliche Absackmaschine in handelsübliche Säcke gepackt.

In weiteren Versuchen wurden die mit vermahlenem Produkt gepackten Säcke vor der Palettierung mit einer dafür geeigneten, technisch üblichen Methode egalisiert.

*Tabelle 2: Herstellung des erfindungsgemäßen Siliciumdioxids*

| Bezeichnung | Mühle* | ML**-Menge [m$^3$] | ML**-Druck [bar] | IL*** -Menge [m$^3$] | IL*** -Druck [bar] | Dosierung [kg/h] | Absackung | Egalisierung |
|---|---|---|---|---|---|---|---|---|
| Beispiel 1 | LS | 11,8 | 1,0 | 6,8 | 1,2 | 10 | Nein | Nein |
| Beispiel 2 | LS | 11,8 | 1,0 | 6,8 | 1,2 | 10 | Ja | Nein |
| Beispiel 3 | LS | 11,8 | 1,0 | 6,8 | 1,2 | 10 | Ja | Ja |
| Beispiel 4 | LS | 27,3 | 3,5 | 15,8 | 3,7 | 10 | Nein | Nein |
| Beispiel 5 | LS | 27,3 | 3,5 | 15,8 | 3,7 | 10 | Ja | Nein |
| Beispiel 6 | LS | 27,3 | 3,5 | 15,8 | 3,7 | 10 | Ja | Ja |

(fortgesetzt)

| Bezeichnung | Mühle* | ML**- Menge [m³] | ML**- Druck [bar] | IL*** - Menge [m³] | IL*** - Druck [bar] | Dosierung [kg/h] | Absackung | Egalisierung |
|---|---|---|---|---|---|---|---|---|
| Beispiel 7 | ST | - | - | - | - | 10 | Nein | Nein |
| Beispiel 8 | ST | - | - | - | - | 10 | Ja | Nein |
| Beispiel 9 | ST | - | - | - | - | 10 | Ja | Ja |
| Beispiel 10 | ST | - | - | - | - | 20 | Nein | Nein |
| Beispiel 11 | ST | - | - | - | - | 20 | Ja | Nein |
| LS* = Luftstrahlmühle<br>ST = Stiftmühle<br>ML** = Mahlluft<br>IL*** = Injektorluft | | | | | | | | |

*Tabelle 3*

| Physikalisch-chemische Daten der erfindungsgemäß hergestellten Siliciumdioxide | | | | | |
|---|---|---|---|---|---|
| Bezeichnung | Spezifische Oberfläche nach BET [m²/g] | pH-Wert | Stampfdichte [g/l] | Grindometerwert [μm] | Medianwert nach PCS [nm] |
| Vergleichsbeispiel 1 | 197 | 4,1 | 46 | 40 | 86 |
| Beispiel 1 | 197 | 4,1 | 24 | 25 | 74 |
| Beispiel 2 | 198 | 4,1 | 48 | 25 | 65 |
| Beispiel 3 | 199 | 4,1 | 62 | 30 | 72 |
| Beispiel 4 | 200 | 4,1 | 22 | 23 | 68 |
| Beispiel 5 | 200 | 4,1 | 41 | <20 | 73 |
| Beispiel 6 | 199 | 4,1 | 63 | 25 | 75 |
| Beispiel 7 | 197 | 4,1 | 21 | 30 | 73 |
| Beispiel 8 | 198 | 4,1 | 47 | 20 | 65 |
| Beispiel 9 | 198 | 4,2 | 52 | 20 | 71 |
| Beispiel 10 | 199 | 4,1 | 18 | 25 | 75 |
| Beispiel 11 | 198 | 4,1 | 49 | 25 | 65 |

Die erfindungsgemäßen Siliciumdioxide zeigen bei nahezu gleichbleibenden spezifischen Oberflächen in dem Bereich von 195 bis 202 m²/g, vorzugsweise von 198 bis 200 m²/g, und unveränderten pH-Werten niedrigere Grindometerwerte und kleinere Medianwerte gegenüber dem Ausgangssiliciumdioxid.

Überraschenderweise bleiben die niedrigeren Grindometerwerte und kleineren Medianwerte trotz der an der Stampfdichte erkennbaren Verdichtung durch Absackung beziehungsweise Absackung/Egalisierung erhalten.

Teilweise liegen die Stampfdichten sogar über der des eingesetzten Oxids. Dies bedeutet, daß die erfindungsgemäßen Oxide trotz gleicher oder sogar höherer Verdichtung niedrigere Grindometerwerte und kleinere Medianwerte aufweisen.

*Tabelle 4*

| Teilchengrößenbestimmung durch Auswertung von TEM-Aufnahmen | | | | | | |
|---|---|---|---|---|---|---|
| Bezeichnung | DN [nm] | DA [nm] | DV [nm] | D50(A) [nm] | D50(g) [nm] | Gesamtspanne [nm] |
| Vergleichsbeispiel | 13,838 | 17,513 | 22,372 | 13,043 | 15,010 | 6,180 - 45,740 |
| Beispiel 1 | 11,528 | 12,536 | 13,086 | 11,013 | 12,473 | 5, 260 - 25,500 |
| Beispiel 4 | 12,467 | 13,436 | 13,873 | 12,302 | 13,278 | 5,260 - 22,740 |
| Beispiel 5 | 13,517 | 17,150 | 21,747 | 13,111 | 14,713 | 6,180 - 45,740 |
| Beispiel 8 | 12,551 | 14,147 | 15,429 | 11,684 | 13,173 | 6,180 - 34,700 |
| Beispiel 9 | 12,503 | 20,450 | 28,401 | 11,195 | 35,586 | 5,260 - 45,740 |
| Beispiel 10 | 13,240 | 14,242 | 14,990 | 12,565 | 13,657 | 7,100 - 42,060 |
| DN = Teilchendurchmesser, arithmetrisches Mittel<br>DA = Teilchendurchmesser, über die Oberfläche gemittelt<br>DV = Teilchendurchmesser, über das Volumen gemittelt<br>D50 (A) = Medianwert Anzahlverteilung<br>D50 (g) = Medianwert Gewichtsverteilung | | | | | | |

Das erfindungsgemäße pyrogen hergestellte Siliciumdioxid kann D50 (g) (= Medianwert Gewichtsverteilung) von 12 bis 14 nm, vorzugsweise von 12.473 bis 13.278 nm, aufweisen. Die Gesamtspanne der Teilchen kann von 5.260 bis 34.700 nm, vorzugsweise 5.260 bis 22.740 nm, betragen.

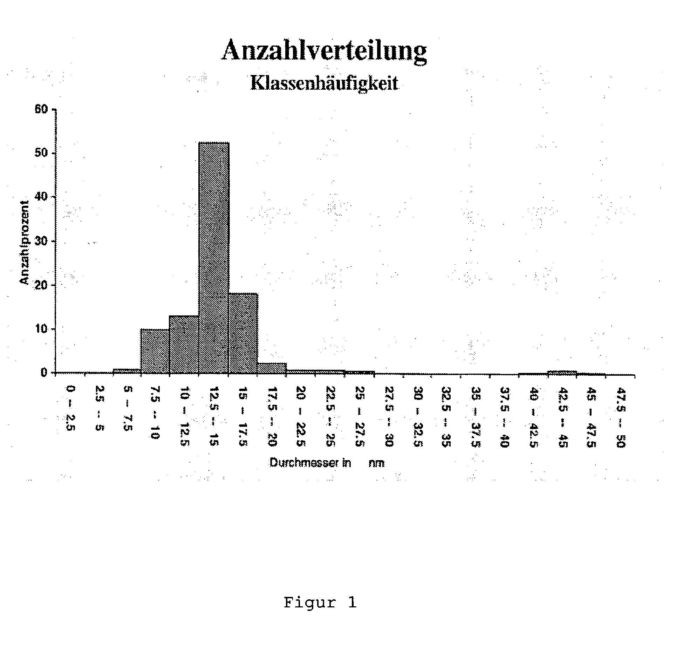

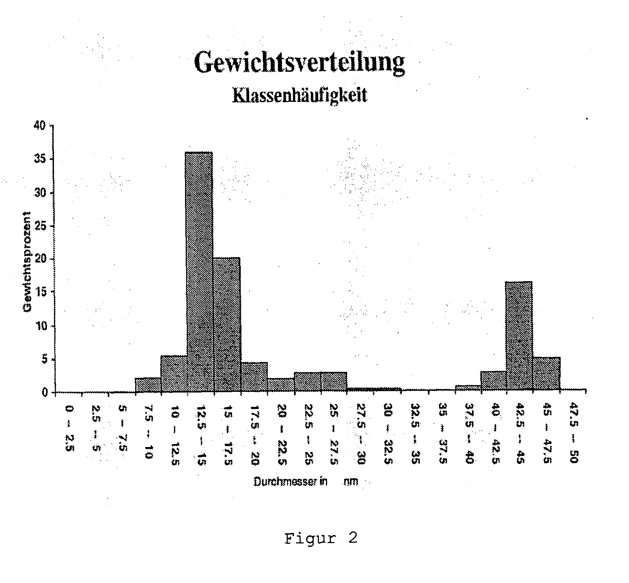

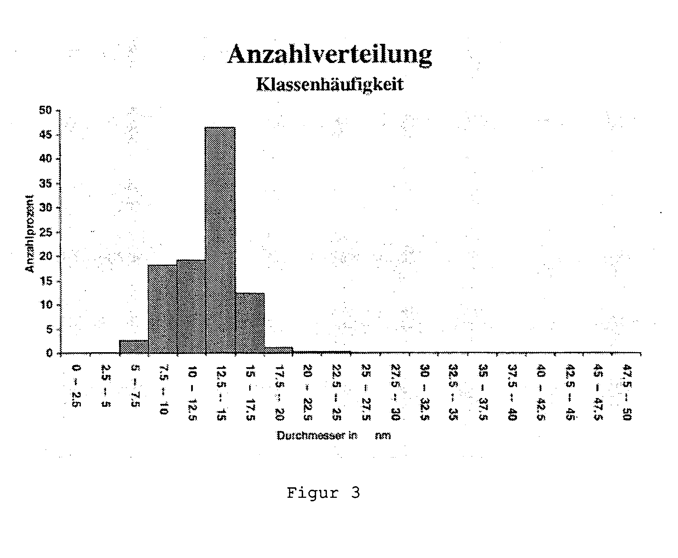

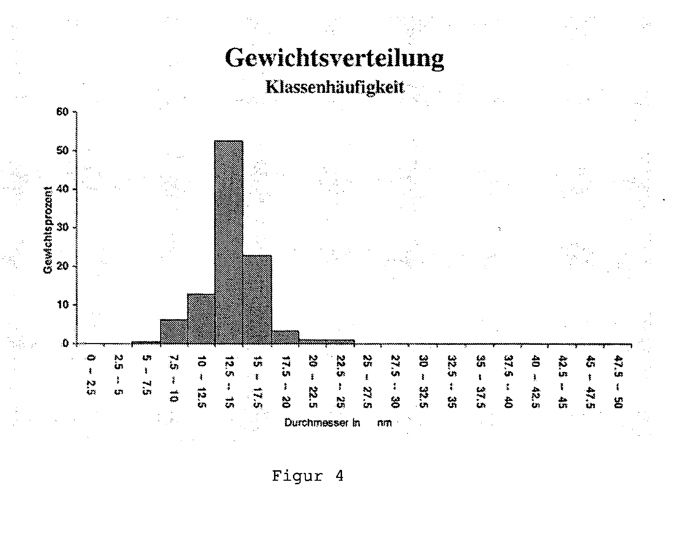

Die Figuren 1 bis 4 zeigen, dass das erfindungsgemäße Siliciumdioxid keine Teilchen in dem Bereich größer 40 nm aufweist, wenn die Gewichtsverteilung betrachtet wird (vgl. Figur 4) .

Das arithmetrische Mittel der Teilchendurchmesser DN kann bei dem erfindungsgemäßen Siliciumdioxid von 11,5 bis 13,5 nm betragen.

Der über die Oberfläche gemittelte Teilchendurchmesser DA kann 12,5 bis 17,2 nm betragen.

Der über das Volumen gemittelte Teilchendurchmesser DV kann 13,0 bis 21,7 nm betragen.

Der Medianwert D50 (A) (Anzahlverteilung) kann 11,0 bis 11,7 nm betragen.

*Bestimmung der physikalisch-chemischen Kenndaten BET-Oberfläche*

Die BET-Oberfläche wird gemäß DIN ISO 9277 bestimmt.

*Stampfdichte*

Die Bestimmung der Stampfdichte erfolgt nach DIN EN ISO 787-11.

Grundlagen der Stampfdichtebestimmung:
Die Stampfdichte (früher Stampfvolumen) ist gleich dem Quotienten aus der Masse und dem Volumen eines Pulvers nach dem Stampfen im Stampfvolumeter unter festgelegten Bedingungen. Nach DIN EN ISO 787-11 wird die Stampfdichte in $g/cm^3$ angegeben. Wegen der sehr niedrigen Stampfdichte der Oxide wird jedoch von uns der Wert in g/l angegeben. Ferner wird auf die Trocknung und Siebung sowie auf die Wiederholung des Stampfvor-ganges verzichtet.

Geräte zur Stampfdichtebestimmung:
Stampfvolumeter
Meßzylinder
Laborwaage (Ablesbarkeit 0.01 g)

Durchführung der Stampfdichtebestimmung:
200 $\pm$ 10 ml Oxid werden in den Meßzylinder des Stampfvolumeters so eingefüllt, daß keine Hohlräume verbleiben und die Oberfläche waagerecht ist.
Die Masse der eingefüllten Probe wird auf 0,01 g genau bestimmt. Der Meßzylinder mit der Probe wird in den Meßzylinderhalter des Stampfvolumeters eingesetzt und 1250 mal gestampft.
Das Volumen des gestampften Oxids wird auf 1 ml genau abgelesen.

Auswertung der Stampfdichtebestimmung:

$$\text{Stampfdichte (g/l)} = \frac{\text{g Einwaage x 1000}}{\text{ml abgelesenes Volumen}}$$

*pH-Wert*

Der pH-Wert wird in 4 %iger wäßriger Dispersion bestimmt.

Reagenzien zur pH-Wert-Bestimmung:

destilliertes oder vollentsalztes Wasser, pH > 5.5 Pufferlösungen pH 7.00 pH 4.66

Geräte zur pH-Wert-Bestimmung:

Laborwaage, (Ablesbarkeit 0,1 g)
Becherglas, 250 ml
Magnetrührer
Magnetstab, Länge 4 cm
kombinierte pH-Elektrode
pH-Meßgerät
Dispensette, 100 ml

Arbeitsvorschrift zur Bestimmung des pH-Wertes:

Die Bestimmung erfolgt in Anlehnung an DIN/ISO 787/IX.

Eichung: Vor der pH-Wertmessung wird das Meßgerät mit den Pufferlösungen geeicht. Werden mehrere Messungen hintereinander durchgeführt, genügt eine einmalige Eichung.

4 g Oxid werden in einem 250 ml Becherglas mit 96 g (96ml) Wasser unter Zuhilfenahme einer Dispensette vermischt und fünf Minuten bei eingetauchter pH-Elektrode mit einem Magnetrührer gerührt (Drehzahl ca. 1000 min-1).

Nach Abstellen des Rührers wird der pH-Wert nach einer Standzeit von einer Minute abgelesen. Das Ergebnis wird mit einer Dezimale ausgewiesen.

*Grindometerwert*

Grundlagen:
Der Grad der Dispergierung bestimmt die anwendungstechnischen Eigenschaften der mit Aerosil verdickten Flüssigkeit. Die Messung des Grindometerwertes dient zur Beurteilung des Dispergiergrades. Unter dem Grindometerwert versteht man die Grenzschichtdicke, unterhalb derer die vorliegenden Stippen beziehungsweise Aggregate auf der Oberfläche der ausgestrichenen Probe sichtbar werden.
Die Probe wird mit einem Schaber in einer Rinne ausgestrichen, deren Tiefe an einem Ende doppelt so groß ist, wie der Durchmesser der größten Aerosil-Körner und zum anderen Ende stetig bis 0 abnimmt. Auf einer die Tiefe der Rinne angegebenen Skala wird derjenige Wert für die Tiefe in Mikrometer abgelesen, unterhalb dessen eine größere Anzahl von Aerosil-Körnern durch Stippen oder Kratzer auf der Oberfläche des Bindemittelsystems sichtbar werden. Der abgelesene Wert ist der Grindometerwert des vorliegenden Systems.
Geräte und Reagenzien:
Grindometer nach Hegmann mit einem Tiefenbereich von 100-0 Mikrometer.
Dispersion Polyesterharz mit 2 % Aerosil, hergestellt nach Prüfanweisung 0380.
Durchführung:
Der Grindometerblock wird auf eine ebene, rutschsichere Fläche gelegt und unmittelbar vor der Prüfung sauber abgewischt. Dann wird die Aerosil-Dispersion, die frei von Luftblasen sein muß, an der tiefsten Stelle der Rinne so aufgebracht, daß sie etwas über den Rand der Rinne hinwegfließt. Der Schaber wird nun mit beiden Händen gefaßt und senkrecht zum Grindometerblock und im rechten Winkel zu seinen Längskanten mit leichtem Druck auf das Ende der Rinne aufgesetzt, in dem sich die Dispersion befindet. Dann wird die Dispersion durch langsames, gleichmäßiges Ziehen des Schabers über den Block in der Rinne ausgestrichen. Spätestens 3 Sekunden nach dem Ausstreichen der Dispersion wird der Grindometerwert abgelesen.

Dabei wird die Oberfläche der ausgestrichenen Dispersion (quer zur Rinne) schräg von oben unter einem Winkel von 20-30° (zur Fläche) betrachtet. Der Block wird so zum Licht gehalten, daß die Oberflächenstruktur der ausgestrichenen Dispersion gut zu erkennen ist.

Auf der Skala wird als Grindometerwert der Wert in Mikrometer abgelesen, unterhalb dessen eine größere Anzahl von Aerosil-Körnern als Stippen oder Kratzer auf der Oberfläche sichtbar werden. Einzelne, zufällig auftretende Stippen oder Kratzer werden dabei nicht berücksichtigt.

Die Körnigkeit wird mindestens zweimal beurteilt, und zwar jeweils an einer neu ausgestrichenen Dispersion.

Auswertung:

Aus den Meßwerten wird der arithmetische Mittelwert gebildet.

Zwischen dem Grindometerwert in Mikrometer und den auf dem Zollsystem basierenden Hegmann-Einheiten und FSPT-Einheiten besteht folgender Zusammenhang:

B = 8 -0,079 A

C = 10 -0,098 A = 1,25 B

Hierin bedeuten:

A = Grindometerwert in Mikrometer

B = Grindometerwert in Hegmann-Einheiten

C = Grindometerwert in FSPT-Einheiten

*Teilchengrößenbestimmung mittels PCS*

Zweck:

Die nachfolgend beschriebene Untersuchungsmethode dient zur Bestimmung der Teilchengrößenverteilung mittels Photonenkorrelationsspektroskopie (PCS, "dynamische Lichtstreuung) der dispersen Phase (meist feste Partikel) in Dispersionen. Diese Methode ist besonders geeignet, Teilchen und deren Aggregate zu bestimmen, deren Größe im Submikrometer-Bereich liegt (10 nm bis 3 $\mu$m).

Allgemeines, Theorie:

Grundlage für die Teilchengrößenbestimmung mittels PCS ist die sog. Stokes-Einstein-Gleichung, die den Zusammenhang zwischen Teilchengröße (ausgedrückt durch den sog. hydrodynamischen Durchmesser d(H)) und dem Diffusionskoeffizienten D der Teilchen aufzeigt:

$$d(H) = kT/3 \; \eta . \pi \; D$$

Anschaulich läßt sich diese Gleichung über ein Kräftegleichgewicht zwischen der Brown'schen Bewegung der Teilchen und dem entgegenstehenden Strömungswiderstand herleiten. An dieser Gleichung läßt sich auch bequem erkennen, welche Parameter bekannt bzw. konstant sein müssen: die Viskosität $\eta$ des Dispergiermediums und die Temperatur T. Wenn dies gewährleistet ist, läßt sich über die Bestimmung des Diffusionskoeffizienten der hydrodynamische Durchmesser berechnen. Anders ausgedrückt: Große Teilchen bewegen sich langsam, kleine schnell.

Die Bewegung der Teilchen in einer Dispersion kann man über die Fluktuation der Streulichtintensität eines Laserstrahls verfolgen. Liegen schnelle Bewegungen vor, so fluktuiert die Intensität wenig, langsamere Teilchen erzeugen stärkere Fluktuationen. Über mathematische Operationen wie einer Fourier-Transformation oder einer Auto-Korrelations-Funktion läßt sich aus dem Fluktuationsmuster des im Mittel konstanten Streulichtsignals eine Teilchenverteilung herleiten.

Im einfachsten Fall wird eine monodisperse Verteilung angenommen. Trägt man nun den Logarithmus der Autokorrelationsfunktion gegen die Korrelationszeit auf, so ergibt sich die mittlere Diffusionskonstante aus der Steigung der Ausgleichsgeraden. Diese Form der Auswertung ist als "Kumulantenanalyse" bekannt. In der Realität ist dieser Zusammenhang meist nicht linear, da nicht wirklich monodisperse Verteilungen vorliegen. Als Maß für die Verteilungsbreite wird der Polydispersitätsindex "PI" definiert, indem man statt einer Geraden ein Polynom dritten Grades anpasst. Der "PI" ist nun PI = 2c/b2 mit b und c als die Koeffizienten zweiten und dritten Grades.

Um Volumen- oder Massengewichtete Mittelwerte zu bestimmen, muß man allerdings die Mie-Theorie (umfassende Streulicht-Theorie) bemühen, die die Kenntnis der Brechungsindices von Partikel und Dispersionsmedium voraussetzen. Um noch mehr Informationen aus den Intensitätsfluktuationen zu gewinnen, können mathematisch auch andere Verteilungen als zum Beispiel eine (oder mehrere) Log-Normalverteilung(en) angepaßt werden. Bewährt hat sich hierzu die sogenannte "Contin"-Analyse, die schiefe und auch mehrmodale Verteilungen umfaßt.

Da die Definition des hydrodynamischen Durchmessers auf der Annahme der Kugelgestalt der Partikel beruht, ist das erhaltene Meßergebnis bei nicht sphärischen Teilchen stets als Äquivalent-Kugeldurchmesser zu verstehen. Das bedeutet, daß der Durchmesser einer Kugel angegeben wird, welche dieselben Intensitätsfluktuationen verursacht wie das zu bestimmende nicht-kugelförmige Teilchen. Mit einer "tatsächlichen Größe" hat der hydrodynamische Durchmesser also nur mittelbar zu tun.

*Meßvoraussetzungen, Einschränkungen:*

Der Aufbau der Streulichtgeometrie verschiedener Geräte bedingt meßtechnische Einschränkungen. Das klassische PCS-Gerät wie das hier verwendete Gerät Malvern Zetasizer 3000 benutzt einen Streulichtwinkel von 90°. Um Mehrfachstreuung auszuschließen, die das Meßergebnis verfälschen würden, muß die Meßprobe bei dieser Geometrie stark verdünnt werden. Anhaltswerte sind eine Konzentration von 0,001-0,01 Gew-%. Augenscheinlich sollten die zu messenden Dispersionen durchscheinend sein und nur eine leichte Trübung aufweisen.

Andere Geometrien erlauben auch die Verwendung größerer Konzentrationen. So lassen sich je nach Partikeltyp (Teilchendichte, Morphologie) auch Konzentrationen von 0,5 bis 30 Gew-% vermessen. Das Horiba LB 500 Gerät verwendet dazu beispielsweise eine rückstreuende Optik, bei der das Verhältnis zwischen Einfach- und Mehrfachstreuung fast konstant ist und sich somit vernachlässigen läßt. Bei der alternativen 3D-Kreuzkorrelationstechnik kann man den Anteil an mehrfach gestreutem Licht durch die Verwendung von zwei unabhängigen Laserstrahlen mathematisch eliminieren. Bei der Verwendung von höheren Konzentrationen ist allerdings eine weitere Einschränkung zu beachten: Die Bestimmung der Diffusionskonstante setzt die freie Beweglichkeit der Partikel voraus, die bei hohen Konzentrationen nicht mehr gegeben ist. Aus diesem Grund sollte mit Geräten, die die Verwendung höherer Konzentrationen erlauben, routinemäßig Verdünnungsreihen gemessen werden.

Zur Bestimmung des Teilchengrößenverteilung mittels PCS ist die Kenntnis folgender Stoffparameter notwendig:

*Temperatur der Dispersion*

Beim Zetasizer 3000 wird der Probenhalter über ein Peltierelement temperiert (25°C), und die Temperatur wird während der Messung konstant gehalten. Dies ist wichtig, um Konvektionsbewegung innerhalb der Küvette auszuschließen, die die freie Bewegung der Partikel überlagern würde. Das Horiba LB500 mißt die Temperatur in der Küvette und berücksichtigt die gemessene Temperatur bei der Auswertung.

*Viskosität des Dispersionsmediums*

Bei den stark verdünnten Systemen unkritisch, da hier die Viskositäten z.B. bei 25°C der reinen Lösungsmittel gut bekannt sind. Man muß allerdings sicherstellen, daß die richtige Viskosität zur Berechnung verwendet wird.

*Brechungsindex von Teilchen und Dispersionsmedium*

Diese Angaben sind nur für die volumengewichtete Auswertung notwendig. Für die Bestimmung einer Kumulantenanalyse (zave, PI) sind diese Angaben unwichtig. Für Standardsysteme gibt es Tabellenwerte (s. Handbuch zum Meßgerät), bei zum Beispiel oberflächenmodifizierten Stoffen sollte man sich allerdings dieser möglichen Fehlerquelle bewußt sein, wenn der Brechungsindex nicht genau bekannt ist und dort nur die Kumulantenanalyse verwenden.

Weiterhin sind folgende Voraussetzungen zu erfüllen:

Die Dispersion muß sedimentationsstabil sein. Sedimentation in der Küvette erzeugt nicht nur zusätzliche Bewegung der Teilchen (siehe oben), sondern durch sie verändert sich die Streulichtintensität während der Messung. Außerdem verarmt die Dispersion damit an größeren Teilchen, die sich am Boden der Küvette ansammeln. Aus diesem Grund sollte man während der Messung die Streulichtintensität verfolgen ("Count rate"). Ist diese nicht stabil, sollte das Meßergebnis nicht interpretiert werden. Diese Einschränkung ist der Grund, warum die obere Meßgrenze der PCS abhängig vom Dichteunterschied Partikel/Medium der Dispersion ist.

Zum Verdünnen der Dispersion auf Meßkonzentration ist sauberstes, staubfreies Lösungsmittel (in der Regel Wasser) zu verwenden. Dies ist insbesondere für das Messen kleiner Teilchen sowie in stark verdünnten Dispersionen zu beachten.

Geräte:

Malvern Zetasizer 3000 HSa Meßgerät
Einmalküvetten 10x10x48 mm (z.B. Sarstedt Ref. 67.754) für wäßrige Dispersionen beziehungsweise Glasküvetten 10x10x48 mm für lösungsmittelhaltige Dispersionen
Becherglas
Spritze (20 ml)
Einmalfilter 200 $\mu$m (zum Beispiel Macherey-Nagel Chromafil A-20/25, Cellulose-Mischester)
Einmalpipetten
Software, Einstellungen

Das Meßgerät Malvern Zetasizer 3000 HSa wird über ein Computerprogramm gesteuert, welches auch die Auswertung des Meßsignals durchführt und das Abspeichern und Ausdrucken der Meßergebnisse erlaubt. Zur Bedienung des Programms sei an dieser Stelle auf das Handbuch verwiesen.
Vor jeder Messung müssen innerhalb der Software folgende Einstellung vorgenommen werden:

Eingabe der Brechungsindices von Partikel und Medium (siehe oben)
Eingabe der Viskosität des Dispersionsmediums (siehe oben) Bezeichnung und Kommentare zur Probe
Pfad und Datei zum Abspeichern des Meßergebnisses Standardmäßig sind außerdem noch folgende Einstellungen vorhanden, die in der Regel nicht verändert werden:

jeweils werden 10 Messungen zu einer Meßserie zusammengefaßt und deren Mittelwert als Meßergebnis ausgegeben.

pro Probe werden 3 solcher Messungen durchgeführt.

Vor jeder Messung wird 1 Minute gewartet (zur Temperaturkonstanz)
Attenuator "Auto" (Gerät schwächt automatisch die Signalintensität bis zu einem Faktor 128 ab, damit muß die Probe nicht so exakt vorbereitet werden.)
Datenanalyse "Contin"
Sonstige Einstellungen: Dilation 1.20; weighting "quadratic"; sizerange "Auto"; Point select "Auto", by cut off 0.01; Optical Properties 0.00, core Real 1.6, core Imag. 0; Mark-Howwink-Parameter A 0.5 cm2/s, K 0.000138.

*Arbeitsvorschrift:*

*Probenvorbereitung:*

20 ml reines Lösungsmittel (in der Regel vollentsalztes Wasser) werden mit Hilfe einer Spritze über einen 200 $\mu$m Filter gefiltert und anschließend in ein sauberes, staubfreies Becherglas gegeben. Im Falle, daß die zu messende Dispersion sauer oder basisch eingestellt wurde, wird entsprechend eingestelltes vollentsalztes Wasser verwendet, um einen pH-Schock beim Verdünnen der Dispersion zu vermeiden. Zum Lösungsmittel wird nun 1 Tropfen der Dispersion mit Hilfe einer Einmalpipette gegeben und das Becherglas einige Zeit leicht umgeschwenkt, bis der Tropfen sich homogen verteilt hat, und eine leicht trübe Lösung entstanden ist. Diese wird mit Hilfe einer zweiten Einmalpipette in die Küvette gefüllt, diese verschlossen und im Küvettenhalter des Gerätes befestigt.

Gerätevorbereitung
Das Meßgerät sowie der angeschlossene Computer werden eingeschaltet und das zugehörige Meßprogramm gestartet. Nach Einschalten des Gerätes muß einige Zeit gewartet werden, da Laser und Peltier-Element erst auf Betriebstemperatur kommen müssen. In der Regel wird deshalb das Gerät nur bei längeren Stillstandszeiten (mehrere Tage) ausgeschaltet.
Messung und Auswertung:

Zu Beginn der Messung müssen zunächst die Probenparamter und -Bezeichnung eingegeben werden sowie die Datei in der die Messungen gespeichert werden sollen, ausgewählt werden. Die eigentlichen Messungen werden durch Anklicken des "Go"-Buttons gestartet. Die Meßergebnisse der drei Messungen werden anschließend verglichen. Bei guter Übereinstimmung wird eine der Messungen ausgewählt und durch Auswahl des Menupunktes "View -> New plot ->Volume" als volumengewichtete Verteilung dargestellt. Mit Auswahl von "Copy ->Table as Text" wird das Meßergebnis über die Zwischenablage nach Excel übertragen und dort mit Hilfe eines Makros in eine Berichtsdatei umgewandelt (XLS). Diese derart erzeugte Excel-Datei wird auf dem Server abgelegt.

Stimmen die Meßwerte der Einzelmessungen nicht überein, wird eine Wiederholungsmessung durchgeführt. Zeigt es sich, daß während der Messungen große Schwankungen in der Countrate auftreten, wird das Meßergebnis nicht ausgewertet und die Teilchengrößenmessung gegebenenfalls mit einer anderen Methode durchgeführt.

*II. Siliconkautschukmassen*

*Beispiele 13 bis 16*

Die Versuche zur Bestimmung der Oberflächeneigenschaft von Siliconvulkanisaten wurden im Speedmixer mit folgender Formulierung durchgeführt:

| | | | | |
|---|---|---|---|---|
| 62 % | Polymer E 50 | 31,0 g | | |
| 25 % | Öl M 1000 | 12,5 g | | |
| 1 % | Ruß | 0,5 g | | |
| | | | 15 s | 2500min⁻¹ |
| 4 % | Vernetzer | 2,0 g | | |
| | | | 15 s | 2500min⁻¹ |
| 8 % | Kieselsäure | 4,0 g | | |
| | | | 2x30 s | 500min⁻¹ |
| 1 Tropfen Dibutylzinndilaurat | | | | |
| | | | 2x60 s | 2500min⁻¹ |

In einem mit einem Deckel verschraubbaren Polyethylen-Becher werden 31g (62%) α,ω-Hydroxydimethylsiloxypolydimethylsiloxan (E 50, GE Bayer Silicones) vorgelegt. Anschließend werden 12,5 g (25%) α, ω -Trimethylsiloxypolydimethylsiloxan (M1000, GE Bayer Silicones) dazugegeben. Nach Zugabe von 0.5g (1%) carbon black (Printex 3, Degussa AG) wird das Gemisch 15sec bei 2500 U/min im Speedmixer gemischt.

Zu diesem Gemisch werden dann 2,0g (4%) Ethyltriacetoxysilan (AC 3034, GE Bayer Silicones) zugegeben und bei 2500 U/min 15 s im Speedmixer gemischt. Anschließend werden 4.0g (8%) pyrogene Kieselsäure bei 2500 U/min innerhalb von 30 sec beziehungsweise in zwei Etappen (2x15sec) im Speedmixer eingemischt. An der Innenwandung anhaftendes Material wird abgestreift und der Ansatz nochmals 30sec bei 2500 U/min gemischt. Nach Zugabe von 1 Tropfen (0,01%) Dibutylzinndilaurat wird 120 sec bei 2500 U/min im Speedmixer gemischt. Die so erhaltene Siliconformulierung wird mit einem Rakel ausgestrichen und bei Raumtemperatur in Raumluft innerhalb von 24h vulkanisiert. Die Oberfläche der Vulkanisate wird optisch begutachtet und nach einem Schulnotensystem bewertet:

Noten: 1 = sehr gut, 2 = gut, 3 = befriedigend, 4 = unbefriedigend, 5 = mangelhaft

Die Note 1 wird vergeben, wenn das Vulkanisat keinerlei Fehlstellen oder undispergierte Teilchen aufweist.
Bei der Note 2 sind sehr wenige Fehlstellen sichtbar.
Bei der Note 3 etwas mehr.
Bei der Note 4 sind so viele Fehlstellen sichtbar, daß die Oberflächenansicht für einen technischen Einsatz nicht akzeptabel wäre.
Das gleiche gilt in verstärktem Maße für die Note 5.
Bei der Verwendung der erfindungsgemäßen Kieselsäuren gemäß Beispielen 3, 6, und 9 werden überraschenderweise im Vergleich zu dem Standardmaterial gute Oberflächeneigenschaften der Silikonvulkanisate erhalten.
Das Siliconvulkanisat mit dem Standardmaterial zeigt nur eine unbefriedigende Oberfläche, was auch nicht verwunderlich ist, da Kieselsäuren mit hoher Oberfläche in der Regel gerade aus diesem Grund nicht in Silicondichtungsmassen eingesetzt werden können.

Tabelle 5: Versuche 13-16

| Vers. Nr. | Oxid | Fließgrenze [Pa] | Viskosität D=10 s-1 [Pa*s] | Oberfläche [Noten] |
|---|---|---|---|---|
| | | | | |
| 13 | Vergleichsbeispiel | 521 | 158 | 4,0 |
| 14 | Beispiel 3 | 475 | 141 | 2,0 |
| 15 | Beispiel 6 | 411 | 120 | 2,0 |
| 16 | Beispiel 9 | 438 | 146 | 2,5 |

**Patentansprüche**

1. Pyrogen hergestelltes Siliciumdioxid, **dadurch gekennzeichnet, dass** es die folgenden physikalischchemischen Kenndaten aufweist:

|  |  |
|---|---|
| BET-Oberfläche | $200 \pm 15$ m$^2$/g |
| Grindometerwert | gleich/kleiner 30 $\mu$m |
| Medianwert nach PCS | 65 bis 85 nm |

2. Verfahren zur Herstellung des pyrogen hergestellten Siliciumdioxids gemäß Anspruch 1, **dadurch gekennzeichnet, dass** man ein pyrogen hergestelltes Siliziumdioxid mit einer BET-Oberfläche von $200 \pm 25$ m$^2$/g vermahlt.

3. Verwendung des pyrogen hergestellten Siliciumdioxids gemäß Anspruch 1 als Füllstoff in Siliconkautschuk.

4. Siliconkautschukmassen, enthaltend 0,5 bis 50 Gew.-% des pyrogen hergestellten Siliciumdioxides mit den physikalischchemischen Kenndaten:

|  |  |
|---|---|
| BET-Oberfläche | $200 \pm 15$ m$^2$/g |
| Grindometerwert | gleich/kleiner 30 $\mu$m |
| Medianwert nach PCS | 65 bis 85 nm |

und 40 - 99,5 Gew.-% eines Organopolysiloxans der Formel Zn Si R3-n -O-[Si R2 O]x -Si R3-n -Z'n
mit R = Alkyl, Alkoxy-, Aryl-, Oxim-, Acetoxy-, Alkylreste, mit 1 bis 50 Kohlenstoffatomen, unsubstituiert oder mit O S, F, Cl, Br, I substituiert, jeweils gleich oder verschieden und/oder Polystyrol-, Polyvinylacetat-, Polyacrylat-, Polymethacrylat- und Polyacrylnitrilreste mit 40 - 10.000 Repetiereinheiten,
Z = OH, Cl, Br, Acetoxy-, Amino-, Aminoxy-, Oxim-, AlkoxyAmido-, Alkenyloxy-, Acryloxy-, oder Phosphatresten, wobei die organischen Reste bis zu 20 Kohlenstoffatome tragen können, jeweils gleich oder verschieden,

Z'= Oxim-, Alcoxy-, Acetoxy-, Amino-, Amido-,
n = 1 - 3
X = 100 - 15.000.

**Claims**

1. Fumed silica **characterized in that** it has the following physicochemical data:

|  |  |
|---|---|
| BET surface area | $200 \pm 15$ m$^2$/g |
| Grindometer value | equal to/less than 30 $\mu$m |
| Median value by PCS | 65 to 85 nm |

2. Process for preparing the fumed silica according to Claim 1, **characterized in that** a fumed silica having a BET surface area of 200 $\pm$ 25 m$^2$/g is ground.

3. Use of the fumed silica according to Claim 1 as a filler in silicone rubber.

4. Silicone rubber compounds containing 0.5% to 60% by weight of the fumed silica having the following characteristic physicochemical data:

| | |
|---|---|
| BET surface area | 200 $\pm$ 15 m$^2$/g |
| Grindometer value | equal to/less than 30 $\mu$m |
| Median value by PCS | 65 to 85 nm |

and 40% - 99.5% by weight of an organopolysiloxane of the formula Zn Si R3-n -O-[Si R2 O]x -Si R3-n -Z'n
where R = alkenyl, alkoxy, aryl, oxime, acetoxy, alkyl radicals, having 1 to 50 carbon atoms, unsubstituted or substituted by O, S, F, Cl, Br, I, in each case identical or different, and/or polystyrene, polyvinyl acetate, polyacrylate, polymethacrylate and polyacrylonitrile radicals having 40-10 000 repeat units,
Z = OH, Cl, Br, acetoxy, amino, amineoxy, oxime, alkoxyamido, alkenyloxy, acryloxy or phosphate radicals, it being possible for the organic radicals to carry up to 20 carbon atoms, and in each case identical or different,
Z' - oxime, alkoxy, acetoxy, amino, amido,
n = 1-3
x = 100-15 000.

**Revendications**

1. Dioxyde de silicium préparé par voie pyrogène, **caractérisé en ce qu'**il présente les données physico-chimiques suivantes :

| | |
|---|---|
| Surface BET | 200 $\pm$ 15 m$^2$/g |
| Valeur au Grindomètre | inférieure/égale à 30 $\mu$m |
| Valeur médiane selon PCS | 65 à 85 nm. |

2. Procédé pour la préparation du dioxyde de silicium préparé par voie pyrogène selon la revendication 1, **caractérisé en ce qu'**on broie un dioxyde de silicium préparé par voie pyrogène à une surface BET de 200 $\pm$ 25 m$^2$/g.

3. Utilisation du dioxyde de silicium préparé par voie pyrogène selon la revendication 1 comme charge dans du caoutchouc de silicone.

4. Masses de caoutchouc de silicone, contenant 0,5 à 50% en poids du dioxyde de silicium préparé par voie pyrogène présentant les données physico-chimiques :

| | |
|---|---|
| Surface BET | 200 $\pm$ 15 m$^2$/g |
| Valeur au Grindomètre | inférieure/égale à 30 $\mu$m |
| Valeur médiane selon PCS | 65 à 85 nm |

et 40-99,5% en poids d'un organopolysiloxane de formule $Z_n$ Si $R_{3-n}$ -O-[Si $R_2$ O]$_x$ -Si $R_{3-n}$ -Z'$_n$
avec
R = alkyle, des radicaux alcoxy, aryle, oxime, acétoxy, alkyle, comprenant 1 à 50 atomes de carbone, non substitués ou substitués par O, S, F, Cl, Br, I, à chaque fois identiques ou différents et/ou des radicaux polystyrène, poly(acétate de vinyle), polyacrylate, polyméthacrylate et polyacrylonitrile comprenant 40-10 000 unités répétitives,
Z = OH, Cl, Br, des radicaux acétoxy, amino, aminoxy, oxime, alcoxy, amido, alcényloxy, acryloxy, ou phosphate, où les radicaux organiques peuvent porter jusqu'à 20 atomes de carbone, à chaque fois identiques ou différents,
Z' = oxime, alcoxy, acétoxy, amino, amido,
n = 1-3
X = 100-15 000.

# Anzahlverteilung

## Klassenhäufigkeit

Figur 1

## Gewichtsverteilung
### Klassenhäufigkeit

Figur 2

## Anzahlverteilung
### Klassenhäufigkeit

Figur 3

# Gewichtsverteilung

## Klassenhäufigkeit

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040110077 A1
- EP 0076377 B1
- US 6268300 B

**In der Beschreibung aufgeführte Nicht-Patentliteratur**

- Ullmanns Enzyklopädie der technischen Chemie. 1982, vol. 21, 464
- Ullmann's Enzyklopädie der technischen Chemie. vol. 1, 616, 638